# EUROPEAN PATENT APPLICATION

(11) **EP 1 510 133 A1**
(43) Date of publication of application: **02.03.2005**
(21) Application number: 03447221.7
(22) Date of filing: 01.09.2003
(51) Int. Cl.: A23D 9/00

(54) **Balanced oil composition**

(71) Applicant: Belovo S.A., Egg Science & Technology, 6600 Bastogne (BE)
(72) Inventor: Goeseels, Jean-Pierre, 6600 Bastogne (BE); Remacle, Claude, 5101 Loyers (BE); Bourgies, Philippe, 5537 Anhee (BE); Thiry, Jean-Francois, 6600 Bastogne (BE); Dejardin, Philippe, 4870 Trooz (BE); De Meester, Fabien, 6900 Marche-en-Famenne (BE)
(74) Representative: Van Malderen, Joelle

(57) **Abstract**

The present invention is related to an oil composition having a balanced ratio polyunsaturated fatty acids: saturated fatty acids = ω6 : ω3 = 1:1 with a balance of about 10%.

## Description

### Field of the invention

The present invention is related to a new balanced "table" oil composition which is suitable for obtaining balanced dietary lipid diet for mammals, especially for humans and which presents an improved stabilization against oxidation.

The present invention is related to a balanced table oil composition wherein P:S = ω6:ω3 = 1:1 (with an allowance of about 10% and preferably of about 5%). Preferably, in said composition, the percentage of mono unsaturated fatty acids (MUFAs) of said composition is higher than 70% and the percentage of polyunsaturated fatty acids (PUFAs) is reduced, preferably the percentage of ω6 in the composition is lower than 10, more preferably about 7, while the percentage of ω3 is higher than 5, preferably about 7.

The composition according to the invention could also be stabilized against oxidation by addition of a sufficient amount of (preferably natural) source of antioxidants advantageously selected from the group consisting of vitamin C, vitamin E, polyphenols including catechins, antocyanins, etc., sulfur-containing antioxidants including glutothione and lipoic acid, and/or a mixture thereof in order to reach stability against oxidation similar to that of olive oil.

The oil composition is advantageously obtained by a combination of about 85% to about 95% (preferably about 88%) of olive oil and/or canola oil (which is advantageously low in ω6) and about 5% to about 15% (preferably about 12 %) of flax oil, chia oil and/or perilla oil.

Another aspect of the present invention is related to the use of said type oil in a "functional" food composition comprising a sufficient amount of said oil combined with other elements for obtaining dressing and/or cold/warm culinary delicacies, such as mayonnaise.

### Examples

### Columbus®oil

### Balanced table oil for uses in dressing and cold/warm culinary delicacies

Columbus®Oil typically is a .mixture of vegetable oils that is formulated to deliver the balanced lipid composition, i.e. P:S = ω6 : ω3 = 1:1, recommended by advanced nutritional sciences which recognize the need of a return to a dietary fatty acid standard reminiscent of that on which human has evolved on since its inception a couple of million years ago.

Modern oils are typically high in omega-6 plant fatty acid (linoleic acid, C18 : 2ω6) and typically low in omega-3 plant fatty acids (alpha-linolenic acid, C18:3ω3) with ω6:ω3 ratio's ranging all the way up from +/-50 to +/- 500.

Only a few of them (wheat germ, soybean, walnut, canola), richer in omega-3 fatty acids and with ω6 :ω3 ratio's extending from +/- 2 to +/- 10, are now becoming commercially available.

Other oils very rich in omega-3 fatty acids (flax, chia and perilla) with ω6 : ω3 ratio's in the range of 0.3 to 0.2, are also presently brought to the attention of the consumer, but these oils are extremely rich in polyunsaturated fatty acids (PUFAS) (P:S OF 8 to 10) and are very sensitive to oxidation.

**Table 1.**

| Table oils currently available on the market and Columbus Oil | | | | | | | |
|---|---|---|---|---|---|---|---|
| Lipid Source | SAFA | MUFA | PUFA | | | Total | |
| | | ω7 +ω9 | ω6 | ω3 | ω6:ω3 | P:S | S+M+P |
| Sunflower | 13 | 27 | 61 | 0.1 | 610 | 4.7 | 101.1 |
| Peanut | 14 | 43 | 35 | 0.1 | 350 | 2.5 | 92.1 |
| Grapeseed | 14 | 21 | 68 | 0.5 | 136 | 4.9 | 103.5 |
| Corn | 16 | 32 | 51 | 1 | 51 | 3.2 | 100 |
| Palm | 51 | 40 | 9 | 0.25 | 36 | 0.2 | 100.25 |
| Olive (1) | 16 | 70 | 13 | 0.6 | 22 | 0.8 | 100.6 |
| Coconut | 92 | 7 | 1.5 | 0.1 | 15 | 0.02 | 100.6 |
| Olive (2) | 15 | 79 | 5 | 0.6 | 8 | 0.4 | 99.6 |
| Wheat germ | 20 | 18 | 55 | 7 | 8 | 3.1 | 100 |
| Soybean | 16 | 22 | 54 | 7.5 | 7 | 3.8 | 99.5 |
| Walnut | 11 | 15 | 62 | 12 | 5 | 6.7 | 100 |
| Canola | 7 | 63 | 20 | 10 | 2 | 4.3 | 100 |
| **Columbus** | **14** | **72** | **7** | **7** | **1** | **1.0** | **100** |
| Chia | 9.7 | 6.7 | 19 | 64 | 0.3 | 8.6 | 99.4 |
| Flax | 6.9 | 19.5 | 15 | 57.5 | 0.26 | 10.5 | 98.9 |
| Perilla | 8.5 | 14.4 | 12.6 | 63.2 | 0.20 | 8.9 | 98.7 |

With all these oils available, one may think that the consumer may end up by chance with a more or less balanced fatty acid ratio in his average diet, but this will clearly depends on the availability of each oil at the point of purchase and/or consumption and on the consumer awareness that these oils are complementary and must then be ingested in a appropriate manner.

Clearly, the adoption of a balanced dietary lipid diet remains a cumbersome exercise and there is therefore a need for an oil mixture that is providing a balanced composition in once.

The Columbus Oil is preferably obtained through the combination of 88% olive oil (sample 2 low in omega-6) and 12% flax oil to obtain an oil mixture that is perfectly balanced in polyunsaturated, saturated, omega-6 and omega-3 fatty acids, while being one of the richest source of monounsaturated fatty acids (MUFAs) (M:72%) as recommended by advanced nutritional guidelines (P:M:S = 1:6:1).

It is obvious that this specification may be obtained and/or approached through various other combinations like those of olive and/or canola oils with chia and/or perilla oils.

Preferably, the balanced mixture of oils is stabilized against oxidation with a natural source of antioxidants such as vitamin C, vitamin E, polyphenols including catechins, antocyanins, etc., sulfur-containing antioxidants including glutothione and lipoic acid, and/or mixtures of those to reach a stability at least similar to that of olive oil.

Interestingly, the ω6:ω3 ratio in Columbus®Oil is similar to that of essential fatty acids in wild-type river and marine fishes (table 2). However, fishes are also rich in LC-PUFAs which brings the P.S ratio towards much higher values characteristic of very oxidation-sensitive oils.

**Table 2 -**

| Columbus®Oil vs fish oils | | | | | | | |
|---|---|---|---|---|---|---|---|
| Lipid Source | SAFA | MUFA | PUFA | | | Total | |
| | | ω7 +ω9 | ω6 | ω3 | ω6 :ω3 | P:S | S+M+P |
| **Columbus®** | **14** | **72** | **7** | **7** | **1** | **1.0** | **100** |
| Salmon | 20 | 30 | 5 | 5 | 1 | 2.5* | 60* |
| Trout | 25 | 30 | 6 | 6 | 1 | 1.8* | 67* |

| | | | | | | | |
|---|---|---|---|---|---|---|---|
| *calculated as (100 - (SAFA + MUFA)/SAFA to take account of the contribution of LC-PUFA of fish (salmon and trout) not accounted for in the table. | | | | | | | |

## Claims

1. An oil composition having a balanced ratio P:S = ω6:ω3 = 1:1 with an allowance of about 10%.

2. The composition according to claim 1, wherein the percentage of mono unsaturated fatty acids is higher than 70% and the percentage of polyunsaturated fatty acids is lower than 30%.

3. The composition according to claim 2, wherein the percentage of ω6 is lower than 10% and the percentage of ω3 in the composition is higher than 5%.

4. The composition according to claim 3, wherein the percentage of ω6 and the percentage of ω3 are about 7%.

5. The composition according to any one of the preceding claims, further comprising an anti-oxidant.

6. The composition according to claim 5, wherein said anti-oxidant is selected from the group consisting of vitamin C, vitamin E, polyphenols including catechins, antocyanins, sulfur-containing antioxidants including glutothione and lipoic acid, and/or a mixture thereof.

7. The composition according to any one of the preceding claims, comprising about 85% to about 95% (preferably about 88%) of olive oil and/or canola oil, and about 5% to about 15% (preferably about 12 %) of flax oil, chia oil and/or perilla oilflax.

8. The composition according to any one of the preceding claims, comprising about 14% of saturated fatty acids, about 72% of ω7+ ω9 monounsaturated fatty acids, about 7% of ω6 polyunsaturated fatty acids, about 7% of ω3 polyunsaturated fatty acids, with a ratio ω6 : ω3 = about 1:1, a ratio Polyunsaturated:Saturated fatty acids P:S = about 1.0, and wherein the total amount of saturated, monunsaturated and polyunsaturated fatty acids S+M+P = 100%.

9. Use of the oil composition according to any one of the preceding claims in food industry.

10. Use of the oil composition according to any one of the preceding claims in a food composition comprising a sufficient amount of said oil composition combined with other elements for obtaining dressing and/or cold/warm culinary delicacies, such as mayonnaises.
